# EUROPEAN PATENT SPECIFICATION

(11) **EP 4 525 538 B1**
(45) Date of publication and mention of the grant of the patent: **01.04.2026**
(21) Application number: 22954551.2
(22) Date of filing: 11.08.2022
(51) Int. Cl.: H04W 72/12, H04L 1/1607, H04L 1/1867

(54) **HARQ CODEBOOK CONSTRUCTION METHODS AS WELL AS APPARATUSES, DEVICES AND STORAGE MEDIUM**
VERFAHREN ZUR KONSTRUKTION EINES HARQ-CODEBUCHS SOWIE VORRICHTUNGEN, VORRICHTUNGEN UND SPEICHERMEDIUM
PROCÉDÉS DE CONSTRUCTION DE LIVRE DE CODES DE HARQ ET APPAREILS, DISPOSITIFS ET SUPPORT DE STOCKAGE

(43) Date of publication of application: 19.03.2025
(73) Proprietor: GUANGDONG OPPO MOBILE TELECOMMUNICATIONS CORP., LTD., Dongguan, Guangdong 523860 (CN)
(72) Inventor: ZHANG, Yi, Dongguan, Guangdong 523860 (CN); LIANG, Bin, Dongguan, Guangdong 523860 (CN)
(74) Representative: Novagraaf Technologies
(86) International application number: PCT/CN2022/111933
(87) International publication number: WO 2024/031588

(56) References cited:
- EP-A1- 3 767 859
- CN-A- 111 277 388
- CN-A- 113 473 635
- CN-A- 113 473 635
- CN-A- 113 541 880
- US-A1- 2021 021 381
- MODERATOR (LG ELECTRONICS): "Summary #2 of PDSCH/PUSCH enhancements (Scheduling/HARQ)", 19 October 2021 (2021-10-19), XP052061600, Retrieved from the Internet <URL:https://ftp.3gpp.org/tsg_ran/WG1_RL1/TSGR1_106b-e/Inbox/R1-2110523.zip R1-2110523.docx> [retrieved on 20211019]

## Description

### TECHNICAL FIELD

The present disclosure relates to the technical field of mobile communication, and in particular, to a method, terminal device, and network device for constructing a hybrid automatic repeat request (HARQ) codebook.

### BACKGROUND

In a mobile communication system, downlink control information (DCI) is carried over a physical downlink control channel (PDCCH). The DCI may be used for scheduling or indicating uplink and downlink resource allocation, HARQ information transmission, power control, and the like.

In the related art, a network device schedules a physical downlink shared channel (PDSCH) to a terminal device over DCI. Correspondingly, the terminal device may provide HARQ feedback on reception of the PDSCH scheduled by the network device.

CN 113473635A discloses two-cell scheduling for NR operation. An apparatus for use in user equipment (UE) includes a radio frequency (RF) interface and a processor circuit coupled to the RF interface; the processor circuit is used for receiving downlink control information (DCI) on a physical downlink control channel (PDCCH) via the RF interface, wherein the DCI is configured to schedule a physical downlink shared channel (PDSCH) or a physical uplink shared channel (PUSCH) on two cells; and on the basis of the DCI, receiving downlink information on the PDSCH or transmitting uplink information on the PUSCH via the RF interface on the two cells.

XP52061600 discussed PDSCH/PUSCH enhancements (especially for scheduling and HARQ) for NR above 52.6 GHz, and accepted a counting manner proposed by LG Electronic:
EP3767859 A1 teaches HARQ feedback involving multiple component carriers.

### SUMMARY

Embodiments of the present disclosure provide a method, terminal device and network device for constructing a HARQ codebook. The technical solutions are as follows.

According to some embodiments of the present disclosure, a method for constructing a HARQ codebook is provided according to appended independent claim 1.

According to some embodiments of the present disclosure, a terminal device for constructing a HARQ codebook is provided according to appended independent claim 11.

According to another aspect, a network device for constructing a HARQ codebook is provided according to appended independent claim 14.

### BRIEF DESCRIPTION OF DRAWINGS

For clearer descriptions of the technical solutions according to the embodiments of the present disclosure, the following briefly describes the accompanying drawings required for describing the embodiments. Apparently, the accompanying drawings in the following description show merely some embodiments of the present disclosure, and those of ordinary skill in the art may still derive other drawings from these accompanying drawings without creative efforts.
FIG. 1 is a schematic diagram of an architecture of a communication system according to some embodiments of the present disclosure;
FIG. 2 is a schematic diagram of DCI scheduling according to some embodiments of the present disclosure;
FIG. 3 is a schematic diagram of DCI scheduling according to some other embodiments of the present disclosure;
FIG. 4 is a flowchart of a method for constructing a HARQ codebook according to some embodiments of the present disclosure;
FIG. 5 is a flowchart of a method for constructing a HARQ codebook according to some embodiments of the present disclosure;
FIG. 6 is a flowchart of a method for constructing a HARQ codebook according to some embodiments of the present disclosure;
FIG. 7 is a schematic diagram of DCI scheduling involved in embodiments shown in FIG. 6;
FIG. 8 is a block diagram of an apparatus for constructing a HARQ codebook according to some embodiments of the present disclosure;
FIG. 9 is a block diagram of an apparatus for constructing a HARQ codebook according to some embodiments of the present disclosure; and
FIG. 10 is a schematic structural diagram of a computer device according to some embodiments of the present disclosure.

### DETAILED DESCRIPTION

For clearer descriptions of the objective, technical solutions, and advantages of the present disclosure, the embodiments of the present disclosure are further described in detail with reference to the accompanying drawings.

A network architecture and a service scenario described in the embodiments of the present disclosure are intended to more clearly describe the technical solutions in the embodiments of the present disclosure, and do not constitute a limitation on the technical solutions provided in the embodiments of the present disclosure. A person of ordinary skill in the art may understand that, with evolution of the network architecture and emergence of a new service scenario, the technical solutions provided in the embodiments of the present disclosure are also applicable to a similar technical problem.

A 5^{th}-generation (5G) mobile communication system is also referred to as a new radio (NR) system and includes a terrestrial network (TN) and/or a non-terrestrial network (NTN). Generally, the NTN provides a communication service to a terrestrial user through satellite communication. Currently, NTN systems include NR-NTN and Internet of things (IoT)-NTN systems.

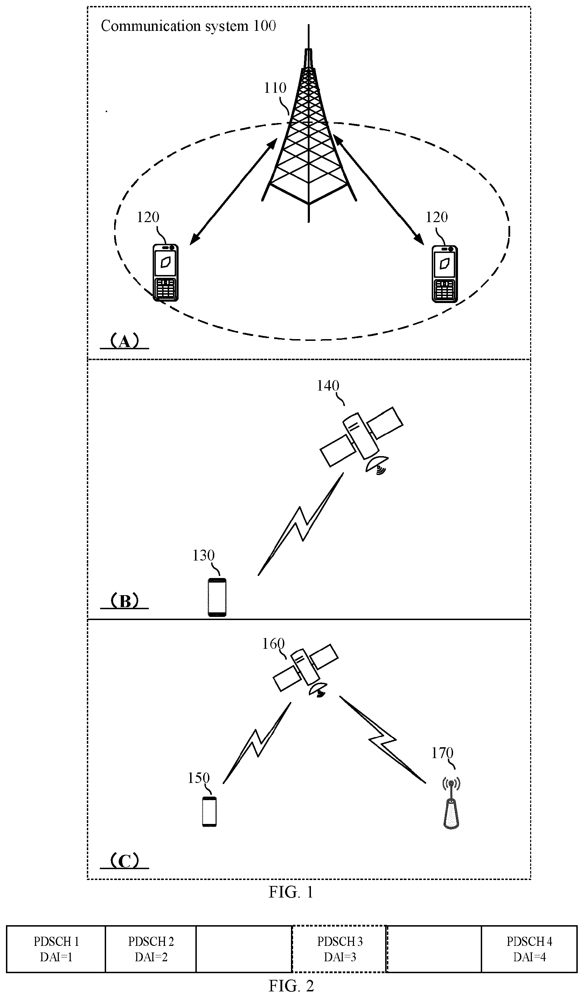

FIG. 1 is a schematic diagram of an architecture of a communication system according to some embodiments of the present disclosure. As shown in part (A) of FIG. 1, a communication system 100 includes a network device 110. The network device 110 is a device that communicates with a terminal device 120 (which is alternatively referred to as a communication terminal or a terminal). The network device 110 provides communication coverage for a specific geographical area and communicates with the terminal device 120 within the coverage.

Part (A) of FIG. 1 illustrates one network device 110 and two terminal devices 120. In some embodiments of the present disclosure, the communication system 100 alternatively includes a plurality of network devices. Each of the network devices covers terminal devices in other quantities, which is not limited in the embodiments of the present disclosure.

The communication system shown in part (B) of FIG. 1 includes a terminal device 130 and a satellite 140. Wireless communication is performed between the terminal device 130 and the satellite 140. A network formed by the terminal device 130 and the satellite 140 is also referred to as an NTN. In the architecture of the communication system shown in part (B) of FIG. 1, the satellite 140 has the function of a base station. Direct communication is performed between the terminal device 130 and the satellite 140. In the system architecture, the satellite 140 is referred to as a network device. In some embodiments of the present disclosure, the communication system alternatively includes a plurality of satellites 140. Each of the satellites 140 covers terminal devices in other quantities, which is not limited in the embodiments of the present disclosure.

The architecture of the communication system shown in part (C) of FIG. 1 includes a terminal device 150, a satellite 160, and a base station 170. Wireless communication is performed between the terminal device 150 and the satellite 160. Communication is performed between the satellite 160 and the base station 170. A network formed by the terminal device 150, the satellite 160, and the base station 170 is referred to as an NTN. In the architecture of the communication system shown in part (C) of FIG. 1, the satellite 160 does not have the function of the base station. Communication between the terminal device 150 and the base station 170 needs to be relayed via the satellite 160. In the system architecture, the base station 170 is referred to as a network device. In some embodiments of the present disclosure, the communication system includes a plurality of base stations 170. Each of the base stations 170 (that is, within signal coverage of the corresponding satellite 160) covers terminal devices in other quantities, which is not limited in the embodiments of the present disclosure.

In the related art, two types of HARQ-ACK codebooks are supported: a type-1 HARQ-ACK codebook and a type-2 HARQ-ACK codebook. The type-2 HARQ-ACK codebook is described as follows.

As for the type-2 HAQR-ACK codebook, a number of bits of the HARQ-ACK codebook is dynamically determined. That is, a terminal device determines, based on received DCI, a number of bits of HARQ-ACK feedback required for a scheduled PDSCH, release of a semi-persistent scheduling (SPS) PDSCH, dormancy of a secondary cell (SCell), or a transmission configuration indicator (TCI) state update indication. In particular, to resolve a problem of missed PDCCHs other than the last PDCCH, a DAI indication is introduced. FIG. 2 is a schematic diagram of DCI scheduling according to some embodiments of the present disclosure. As shown in FIG. 2, a base station transmits a PDSCH 1 to a PDSCH 4, corresponding to DAI=1 to DAI=4. The terminal device misses a PDCCH scheduling the PDSCH 3. Consequently, the PDSCH 3 is not received. However, the terminal receives the PDSCH 4, corresponding to DAI=4. The terminal device determines that the PDSCH 3 is missed and feeds back 4 bits HARQ-ACK to the base station. For example, transmission is based on a transport block (TB), and each piece of DCI schedules only one CW.

In a multi-carrier scenario, DAIs are classified into C-DAIs and total-DAIs (T-DAIs).

The T-DAI denotes a total number of {serving cell, PDCCH monitoring occasion}-pairs on all serving cells up to a current PDSCH monitoring occasion. The PDCCH monitoring occasion is a time domain resource indicated by a search space (SS) and configured to monitor a PDCCH, which is usually in the unit of slots.

The C-DAI is described as follows:
A value of a CDAI field in DCI formats denotes an accumulative number of {serving cell, PDCCH monitoring occasion}-pairs in which PDSCH receptions, excluding PDSCH receptions that provide only transport blocks for HARQ processes associated with disabled HARQ-ACK information if donwlinkHARQ-FeedbackDisabled is provided, or HARQ-ACK information bits that are not in response for PDSCH receptions, associated with the DCI formats, excluding the SPS activation DCI, is present up to the current serving cell and current PDCCH monitoring occasion,
- first, if the UE indicates by type2-HARQ-ACK-Codebook support for more than one PDSCH reception on a serving cell that are scheduled from a same PDCCH monitoring occasion, in increasing order of the PDSCH reception starting time for the same {serving cell, PDCCH monitoring occasion} pair,
- second in ascending order of indexes of serving cells, and
- third in ascending order of indexes m of PDCCH monitoring occasions, where 0≤m<M.

In other words, the C-DAI denotes an accumulative number of {serving cell, PDCCH monitoring occasion}-pairs up to a current serving cell and a current PDSCH monitoring occasion. In the {serving cell, PDCCH monitoring occasion}-pairs, a DCI format that schedules PDSCH reception or indicates SPS PDSCH release SCell dormancy, or TCI state update is present:
(1) first, counting is performed in an ascending order of PDSCH reception start times for the same {serving cell, PDCCH monitoring occasion}-pairs;
(2) then, counting is performed in an ascending order of indexes of serving cells; and
(3) finally, counting is performed in an ascending order of indexes of PDCCH monitoring occasions.

The above three points represent a cyclic order. In other words, for C-DAI counting, the outermost cycle is counted based on PDCCH monitoring occasions, the second cycle from outside to inside is counted based on indexes of serving cells in the case that the PDCCH monitoring occasions are the same, and the innermost cycle is counted based on PDSCH receive times in the case that the PDCCH monitoring occasions are the same and the serving cells are the same.

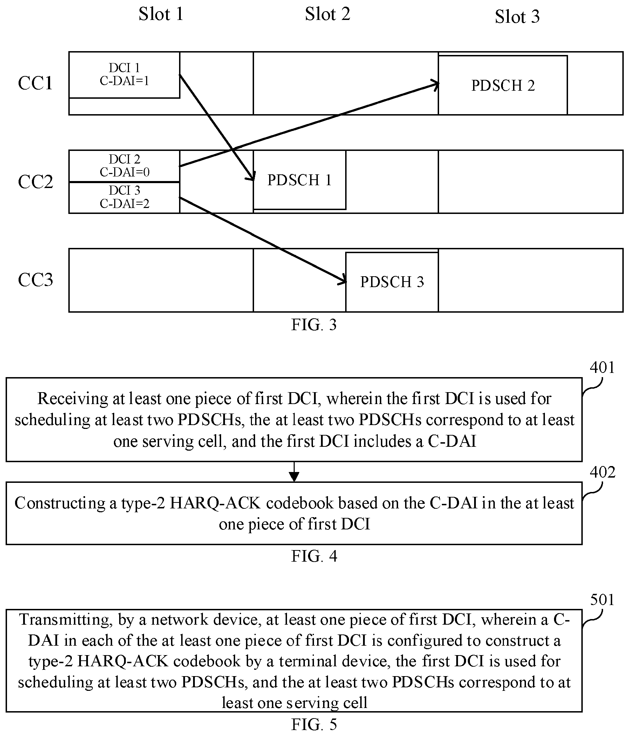

The working mechanism of the C-DAI is referred to FIG. 3, which is a schematic diagram of DCI scheduling according to some embodiments of the present disclosure. As shown in FIG. 3, three component carriers (CCs), namely CC1 to CC3, and three slots (namely slots 1 to 3) are present. DCI 1 to DCI 3 respectively schedule PDSCHs 1 to 3. Based on the above C-DAI counting order, the outermost cycle is counted in an order of the indexes of the PDCCH monitoring occasions. Because the DCI 1 to DCI 3 are all in the slot 1, the indexes of the PDCCH monitoring occasions are the same. Then, in an ascending order of the indexes of the serving cells, because the PDSCH 2 is on CC1, a value of C-DAI in the DCI 2 scheduling the PDSCH 2 is the smallest, i.e., 0, followed by a value of C-DAI in the DCI 1 scheduling the PDSCH 1 on CC2 is 1. A value of C-DAI in the DCI 3 scheduling the PDSCH 3 on CC3 is the largest, i.e., 2.

In a currently developed Rel-18 work item Multi-Carrier, a feature of one piece of DCI scheduling PDSCHs/PUSCHs of a plurality of cells is supported, and a plurality of scheduled serving cells scheduled by one piece of DCI are indicated by the same DCI. A specific indication manner needs to be studied in the following options.

For multi-cell scheduling, co-scheduled cells are indicated by a DCI format 0_X/1_X. At least the following options are considered.

### •Option 1:

An indicator in the DCI points to one row of a table defining combinations of scheduled cells.

The table is configured by RRC signaling.

### •Option 2:

An indicator in the DCI is a bitmap corresponding to a set of configured cells that can be scheduled by the DCI 0_X/1_X.

### •Option 3:

Using existing fields (such as CIF and FDRA) to indicate whether one or more cells are scheduled or not.

### •Other options are not precluded.

In addition, in DCI format 1_X scheduling, all the scheduled cells and the serving cells are in a same PUCCH group.

For example, in the case that R18 supports the feature that one piece of DCI schedules PDSCHs of a plurality of cells, how to feed back a corresponding HARQ-ACK is an issue to be studied. At present, a prevailing design direction is that HARQ-ACK information corresponding to a plurality of PDSCHs scheduled by one piece of DCI is fed back over the same PUCCH, which involves how to construct a type-2 codebook, especially the issue of C-DAI counting order. It is assumed that the base station transmits DCI 1 and DCI 2 in a slot 1. The DCI 1 is used for scheduling a PDSCH 2 on a cell 2 and a PDSCH 3 on a cell 3. The DCI 2 is used for scheduling to a PDSCH 1 on a cell 1 and a PDSCH 4 on a cell 4. Based on the above C-DAI counting order, the outermost cycle is in order of indexes of PDCCH monitoring occasions. Because the DCI 1 and DCI 2 are both in the slot 1, indexes of the PDCCH monitoring occasion are the same. Then, counting is performed based on the indexes of the serving cells of the PDSCH. The cell indexes for the PDSCH 2/3 scheduled by the DCI 1 include two CCs, i.e., CC2 and CC3. The cell indexes for the PDSCH 1/4 scheduled by the DCI 2 include two CCs, i.e., CC1 and CC4. In this case, whether HARQ-ACK information corresponding to the PDSCH 2/3 or HARQ-ACK information corresponding to the PDSCH 1/4 comes first or whether a C-DAI in the DCI 1 or a C-DAI in the DCI 2 comes first is a problem to be resolved.

Referring to FIG.4, FIG. 4 is a flowchart of a method for constructing a HARQ codebook according to some embodiments of the present disclosure. The method is applicable to the terminal device. The terminal device is the terminal device 120, the terminal device 130, or the terminal device 150 in the network architecture shown in FIG. 1. The method includes the following processes.

In 401, the terminal device receives at least one piece of first DCI, wherein the first DCI is used for scheduling at least two PDSCHs, the at least two PDSCHs correspond to at least one serving cell, and the first DCI includes a C-DAI.

In some embodiments, each of the at least one piece of first DCI is used for scheduling at least two PDSCHs.

In some embodiments, each of the at least one piece of first DCI includes a C-DAI.

In some embodiments, each of at least two PDSCHs scheduled by one piece of first DCI corresponds to one serving cell. The serving cells corresponding to the at least two PDSCHs are different. In other words, a one-to-one correspondence is present between the at least two PDSCHs scheduled by the first DCI and the serving cells corresponding to the at least two PDSCHs.

In some embodiments, each of at least two PDSCHs scheduled by one piece of first DCI corresponds to one or more serving cells. In other words, some of the at least two PDSCHs correspond to the same serving cell. For example, the at least two PDSCHs include N PDSCHs corresponding to M serving cells. In the case that M is less than N, two or more PDSCHs corresponding to the same serving cell are present, wherein M and N are positive integers.

In some embodiments, the at least two PDSCHs scheduled by one piece of first DCI correspond to one serving cell combination. The serving cell combination includes at least one serving cell. In other words, the at least two PDSCHs scheduled by the first DCI correspond to the at least one serving cell in the serving cell combination.

In some embodiments, the above manners are implemented in combination. For example, a one-to-one correspondence is present between at least two PDSCHs scheduled by one piece of first DCI and all serving cells corresponding thereto, and all serving cells corresponding to the at least two PDSCHs belong to a same cell combination.

In 402, the terminal device constructs a type-2 HARQ-ACK codebook based on the C-DAI in the at least one piece of first DCI.

In some embodiments, the HARQ-ACK codebook constructed by the terminal device corresponds to the at least one piece of first DCI or the plurality of (or all) PDSCHs scheduled by the at least one piece of first DCI. In other words, the HARQ-ACK codebook is configured to indicate the reception situation of the at least two PDSCHs scheduled by the at least one piece of first DCI by the terminal device.

In summary, in the technical solution according to the embodiments of the present disclosure, in the case that PDSCHs are scheduled by at least one piece of DCI and each piece of DCI schedules at least two PDSCHs, the terminal device constructs the type-2 HARQ-ACK codebook using the C-DAI carried in the DCI, such that a type-2 codebook construction solution used when HARQ-ACK information corresponding to a plurality of PDSCHs scheduled by one piece of DCI is fed back over a same PUCCH is provided, a HARQ feedback solution used when a plurality of PDSCHs are scheduled by one piece of DCI is improved, and HARQ feedback efficiency is enhanced.

FIG. 5 is a flowchart of a method for constructing a HARQ codebook according to some embodiments of the present disclosure. The method is performed by a network device. The network device is the network device 110, the satellite 140, or the base station 170 in the network architecture shown in FIG. 1. The method includes the following processes.

In 501, the network device transmits at least one piece of first DCI, wherein a C-DAI in each of the at least one piece of first DCI is used for constructing a type-2 HARQ-ACK codebook by the terminal device, the first DCI is used for scheduling at least two PDSCHs, and the at least two PDSCHs correspond to at least one serving cell.

The network device transmits the at least one piece of first DCI to the terminal device through a PDCCH.

For the correspondences between the first DCI, PDSCH, and serving cell, reference may be made to the description in the embodiments shown in FIG. 4, which are not repeated herein.

In summary, in the technical solution according to the embodiments of the present disclosure, in the case that PDSCHs are scheduled by at least one piece of DCI and each piece of DCI schedules at least two PDSCHs, the network device transmits the first DCI used for scheduling the at least two PDSCHs and carrying the C-DAI, and the terminal device constructs the type-2 HARQ-ACK codebook using the C-DAI carried in the DCI, such that a type-2 codebook construction solution used when HARQ-ACK information corresponding to a plurality of PDSCHs scheduled by one piece of DCI is fed back over a same PUCCH is provided, a HARQ feedback solution used when a plurality of PDSCHs are scheduled by one piece of DCI is improved, and HARQ feedback efficiency is enhanced.

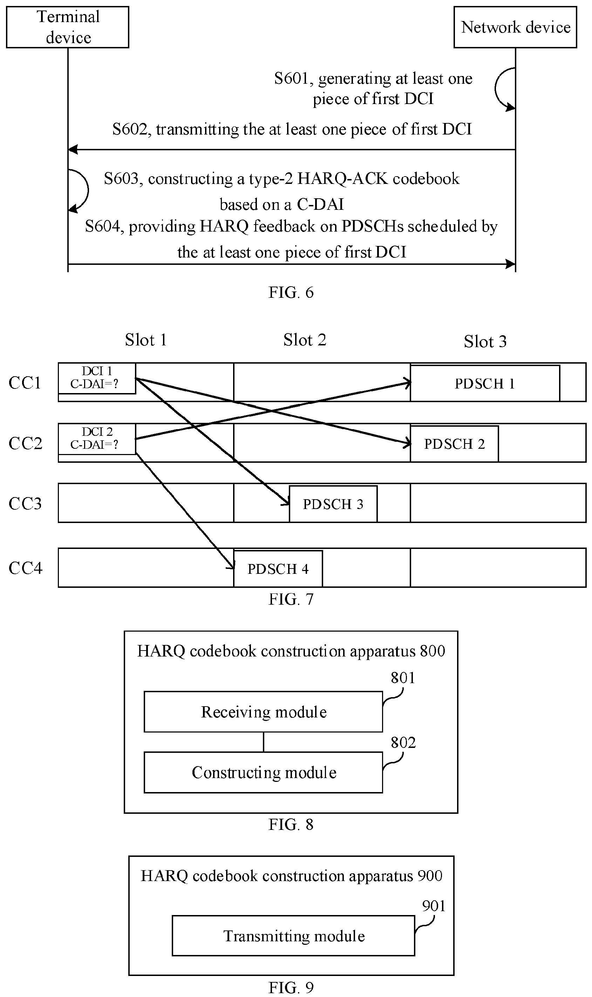

Based on the embodiments shown in FIG. 4 and/or FIG. 5, FIG. 6 is a flowchart of a method for constructing a HARQ codebook according to some embodiments of the present disclosure. The method is interactively performed by a terminal device and a network device. The terminal device and the network device are the terminal device 120 and the network device 110 respectively in the network architecture shown in FIG. 1. Alternatively, the terminal device and the network device are the terminal device 130 and the satellite 140 respectively in the network architecture shown in FIG. 1. Alternatively, the terminal device and the network device are the terminal device 150 and the base station 170 respectively in the network architecture shown in FIG. 1. As shown in FIG. 6, the method includes the following processes.

In 601, the network device generates, determines, or configures at least one piece of first DCI, wherein the first DCI is used for scheduling at least two PDSCHs, the at least two PDSCHs correspond to at least one serving cell, and the first DCI includes a C-DAI.

The correspondences between the first DCI, PDSCH, and serving cell, reference are referred to the description in the embodiments shown in FIG. 4, which are not repeated herein.

In the process of generating the at least one piece of first DCI, the network device sets a C-DAI for each piece of first DCI. For the counting manner of the C-DAI in the first DCI, reference may be made to subsequent descriptions.

In 602, the network device transmits the at least one piece of first DCI, and correspondingly, the terminal device receives the at least one piece of first DCI.

The network device transmits the at least one piece of first DCI over a PDCCH.

Correspondingly, the terminal device detects and receives the at least one piece of first DCI on the PDCCH.

In 603, the terminal device constructs a type-2 HARQ-ACK codebook based on the C-DAI in the at least one piece of first DCI.

Upon receipt of the first DCI, the terminal device performs transmission based on a resource scheduled by the first DCI. The terminal device monitors the at least two PDSCHs scheduled by the first DCI, and counts DCI corresponding to received PDSCHs to determine whether a detection is missed.

In some embodiments, counting the C-DAI in each of the at least one piece of first DCI includes: counting based on indexes of serving cells or indexes of serving cell combinations. Each of the serving cell combinations includes at least one serving cell.

FIG. 7 is a schematic diagram of DCI scheduling according to some embodiments of the present disclosure. As shown in FIG. 7, a base station (namely the above network device) transmits DCI 1 and DCI 2 in a slot 1. The DCI 1 is used for scheduling a PDSCH 2 on a cell 2 and a PDSCH 3 on a cell 3. The DCI 2 is used for scheduling a PDSCH 1 on a cell 1 and a PDSCH 4 on a cell 4. Based on the solution shown in the related art, a C-DAI counting order is as follows. First, counting is performed by indexes of PDCCH monitoring occasions. Because the DCI 1 and DCI 2 are both in the slot 1, and the indexes of the PDCCH monitoring occasions are the same, counting is performed based on indexes of serving cells of the PDSCHs. The cell indexes for the PDSCH 2/3 scheduled by the DCI 1 include two CCs, i.e., CC2 and CC3. The cell indexes for the PDSCH 1/4 scheduled by the DCI 2 include two CCs, i.e., CC1 and CC4. In this case, whether HARQ-ACK information corresponding to the PDSCH 2/3 or HARQ-ACK information corresponding to the PDSCH 1/4 comes first or whether a C-DAI in the DCI 1 or a C-DAI in the DCI 2 comes first is a problem to be resolved by the solution shown in the embodiments of the present disclosure.

In the embodiments of the present disclosure, cells and carriers are equivalent. For example, serving cells are also referred to as carriers; or a one-to-one correspondence is present between cells and carriers. In other words, in a carrier aggregation scenario, one cell corresponds to one CC, and different cells correspond to different CCs.

The above counting based on the indexes of the serving cells or the indexes of the serving cell combinations indicates counting in an ascending/descending order of the indexes of the serving cells or the indexes of the serving cell combinations.

In the embodiments of the present disclosure, a solution of counting in an ascending/descending order of the indexes of the serving cells or the indexes of the serving cell combinations is implemented in the following manners.
(1) Counting in an ascending or descending order based on a minimum value of indexes of serving cells corresponding to the at least two PDSCHs scheduled by the first DCI.

In the embodiments of the present disclosure, the terminal device or network device counts the C-DAI based on based on the minimum value of the indexes of the serving cells in all serving cells scheduled by the first DCI. In some embodiments, in the serving cells scheduled by each piece of first DCI, the serving cell with the minimum value of the index of the serving cells is used as a reference serving cell to subsequently count the C-DAI in the ascending/descending order.

For example, in FIG. 7, the indexes of the serving cells corresponding to two PDSCHs scheduled by DCI 1 are 2 and 3, and the minimum index is 2. The indexes of the serving cells corresponding to two PDSCHs scheduled by DCI 2 are 1 and 4, and the minimum index is 1. In the manner (1) of counting in the ascending order of based on the minimum value of the indexes of the serving cells in all serving cells scheduled by the DCI, the C-DAI in the DCI 2 should be less than a C-DAI in the DCI 1. The C-DAIs in the DCI 1 and DCI 2 is: C-DAI=0 in the DCI 2 and C-DAI=1 in the DCI 1. The C-DAI set to 0 or 1 is merely an example. The C-DAIs in the DCI 2 and DCI 1 may alternatively be set to other values, for example, C-DAI=1 in the DCI 2 and C-DAI=2 in the DCI 1, that is, the C-DAI in the DCI 2 is less than the C-DAI in the DCI 1.

(2) Counting in an ascending or descending order of based on a maximum value of indexes of serving cells corresponding to the at least two PDSCHs scheduled by the first DCI.

In the embodiments of the present disclosure, the terminal device or network device may count the C-DAI based on based on the maximum value of the indexes of the serving cells in all serving cells scheduled by the first DCI. In other words, in the serving cells scheduled by each piece of first DCI, the serving cell with the maximum value of the index of the serving cells may be used as a reference serving cell to subsequently count the C-DAI in an ascending/descending order.

For example, in FIG. 7, in the manner (2) of counting in the ascending order based on the maximum value of the indexes of the serving cells in all serving cells scheduled by the DCI, a C-DAI in the DCI 2 should be greater than a C-DAI in the DCI 1. The C-DAIs in the DCI 1 and DCI 2 are: C-DAI=0 in the DCI 1 and C-DAI=1 in the DCI 2. The C-DAI set to 0 or 1 is merely an example. The C-DAIs in the DCI 2 and DCI 1 may alternatively be set to other values, that is, the C-DAI in the DCI 2 is greater than the C-DAI in the DCI 1.

The solution shown in the manner (1) or (2) has the following advantages. In the case that the reference serving cell is selected from the plurality of serving cells scheduled by the first DCI, the related art is maximally utilized. In addition, the minimum/maximum value of the index of the serving cells is unique.

(3) Counting in an ascending or descending order of indexes of serving cell combinations scheduled by the first DCI

In the manner (3), the concept of scheduling the serving cell combinations through one piece of DCI is introduced. A similar effect is achieved by replacing an index of a serving cell with an index of a cell combination.

The system presets at least one cell combination. Each cell combination includes at least one serving cell.

For example, the network configures a total of 4 serving cells for the terminal, i.e., serving cells 1 to 4. The 4 serving cells belong to a same PUCCH group. The network configures, for the terminal through higher-layer signaling or predefinition in a protocol, cell combinations that DCI can schedule in a one-to-many manner. Each of the cell combinations includes at least two cells in the PUCCH group. A possible cell combination configuration is as shown in Table 1.

**Table 1**

| Cell combination index | Co-scheduled cell |
|---|---|
| 1 | cell 1+cell 4 |
| 2 | cell 2+cell 3 |
| 3 | cell 1+cell 2 |
| 4 | cell 1+cell 3 |
| 5 | cell 2+cell 4 |
| 6 | cell 3+cell 4 |
| 7 | cell 1+cell 2+cell 3 |
| 8 | cell 2+cell 3+cell 4 |

In the manner (3), in the example of a scheduling relationship in FIG. 7, a cell combination index corresponding to cell 2+cell 3 scheduled by DCI 1 is 2, and a cell combination index corresponding to cell 1+cell 4 scheduled by DCI 2 is 1. Assuming that counting is performed in an ascending order, the C-DAI in the DCI 2 is less than the C-DAI in the DCI 1. The C-DAIs are: C-DAI=0 in the DCI 2 and C-DAI=1 in the DCI 1. Similarly, the C-DAI set to 0 or 1 is merely an example. The C-DAIs in the DCI 2 and DCI 1 may alternatively be set to other values, that is, the C-DAI in the DCI 2 is less than the C-DAI in the DCI 1.

(4) Counting in an ascending or descending order of indexes of serving cells corresponding to first PDSCHs scheduled by the first DCI

Each of the first PDSCHs is a PDSCH with an earliest start time in the at least two PDSCHs scheduled by the first DCI.

Alternatively, each of the first PDSCHs is a PDSCH with a latest start time in the at least two PDSCHs scheduled by the first DCI.

Alternatively, each of the first PDSCHs is a PDSCH with an earliest end time in the at least two PDSCHs scheduled by the first DCI.

Alternatively, each of the first PDSCHs is a PDSCH with a latest end time in the at least two PDSCHs scheduled by the first DCI.

The start time is a first orthogonal frequency division multiplexing (OFDM) symbol of a resource occupied by the PDSCH. The end time is a last OFDM symbol of the resource occupied by the PDSCH.

The manner (4) is similar to the manner (1) or (2), and a manner of determining a reference serving cell based on a PDSCH transmission time is provided. In the case that the reference serving cell is determined, the C-DAI counting order in the related art is kept consistent.

For example, in FIG. 7, in the manner (4), counting is performed based on an index of a serving cell corresponding to a last PDSCH (namely the PDSCH with the latest start time/end time) in all serving cells scheduled by the first DCI. Based on the end time of the last PDSCH, in FIG. 7, the last PDSCH in the PDSCH 1/4 scheduled by the DCI 2 is the PDSCH 1, corresponding to CC1; and the last PDSCH in the PDSCH 2/3 scheduled by the DCI 1 is the PDSCH 2, corresponding to CC2. Assuming that counting is performed in an ascending order, the C-DAIs in the DCI 1 and the DCI 2are: C-DAI=0 in the DCI 2 and C-DAI=1 in the DCI 1. Similarly, the C-DAI set to 0 or 1 is merely an example. The C-DAIs in the DCI 2 and DCI 1 may alternatively be set to other values, that is, the C-DAI in the DCI 2 is less than the C-DAI in the DCI 1.

(5) Counting in an ascending or descending order of indexes of serving cells corresponding to serving cells related to the first DCI

In the embodiments of the present disclosure, a counting manner of the C-DAI in the at least one piece of first DCI may alternatively be counting based on the indexes of the serving cells corresponding to the serving cells related to the first DCI.

For example, in FIG. 7, in the manner (5), an index of a serving cell of a serving cell where DCI 1 is located is 1, and an index of a serving cell where DCI 2 is located is 2. For counting in ascending order, a C-DAI in the DCI 1 should be less than a C-DAI in the DCI 2. The C-DAIs in the DCI 1 and DCI 2 are: C-DAI=0 in the DCI 1 and C-DAI=1 in the DCI 2.

In some embodiments, in the case that indexes of serving cells of at least two pieces of first DCI are the same, counting is further performed in (ascending/descending) order of receive time (for example, reception start time/end time) of the at least two PDSCHs scheduled by the first DCI. The reception start time is an earliest time in transmission times of the at least two PDSCHs. The reception end time is a latest time in the transmission times of the at least two PDSCHs.

For example, in FIG. 7, in the manner (5), a reception start time of PDSCHs scheduled by DCI 1 and a reception start time of PDSCHs scheduled by DCI 2 are both in a slot 2. However, the reception start time of the PDSCHs scheduled by the DCI 2 (namely a start time of the PDSCH 4) is earlier than the reception start time of the PDSCHs scheduled by the DCI 1 (namely a start time of the PDSCH 3). Therefore, for counting in an ascending order, a C-DAI in the DCI 1 should be greater than a C-DAI in the DCI 2. The C-DAIs in the DCI 1 and DCI 2 are: C-DAI=0 in the DCI 2 and C-DAI=1 in the DCI 1.

Alternatively, in the case that the indexes of the serving cells of at least two pieces of first DCI are the same, counting is further performed in an ascending/descending order of receive time (for example, reception start time/end time) of the first DCI.

For example, it is assumed that a reception start time of DCI 1 is the 1^{st} symbol in a slot 1 and a reception start time of DCI 2 is the 4^{th} symbol in the slot 1. For counting in an ascending order, a C-DAI in the DCI 1 should be less than a C-DAI in the DCI 2. The C-DAIs in the DCI 1 and DCI 2 are: C-DAI=0 in the DCI 1 and C-DAI=1 in the DCI 2.

Alternatively, in the case that the indexes of the serving cells of at least two pieces of first DCI are the same, counting is further performed in an ascending/descending order of indexes of control resource sets (CORESET) or SS sets associated with the first DCI.

For example, it is assumed that an index of a CORESET associated with DCI 1 is 1 and an index of a CORESET associated with DCI 2 is 2. For counting in an ascending order, a C-DAI in the DCI 1 should be less than a C-DAI in the DCI 2. The C-DAIs in the DCI 1 and DCI 2are: C-DAI=0 in the DCI 1 and C-DAI=1 in the DCI 2.

For example, it is assumed that an index of an SS set associated with DCI 1 is 1 and an index of an SS set associated with DCI 2 is 2. For counting in an ascending order, a C-DAI in the DCI 1 should be less than a C-DAI in the DCI 2. The C-DAIs in the DCI 1 and DCI 2 are: C-DAI=0 in the DCI 1 and C-DAI=1 in the DCI 2.

In the embodiments of the present disclosure, in addition to counting in an ascending order of indexes of serving cells or indexes of serving cell combinations, the counting manner of the C-DAI in the at least one piece of first DCI further includes:
counting based on at least one of an index of a PDCCH monitoring occasion or a PDSCH receive time.

The above solutions are technical solutions according to the embodiments of the present disclosure in an aspect of counting based on a C-DAI per DCI format. Through any one of the above solutions in the manners (1) to (4), for a scenario in which a plurality of PDSCHs are scheduled through one piece of DCI, the base station and the terminal maintain a unified understanding of the C-DAI counting order, that is, a unified rule is provided for generation of HARQ-ACK bits, and generation and transmission of HARQ-ACK information are ensured to be correct.

In some embodiments, counting based on the indexes of the serving cells or the indexes of the serving cell combinations includes: counting based on the indexes of the serving cells or the indexes of the serving cell combinations for a same PDCCH monitoring occasion.

In some embodiments, counting based on the indexes of the serving cells or the indexes of the serving cell combinations for the same PDCCH monitoring occasion is counting based on the indexes of the serving cells or the indexes of the serving cell combinations for two or more pieces of first DCI with the same PDCCH monitoring occasion.

In some embodiments, a counting manner of the C-DAI in the at least one piece of first DCI further includes: counting based on the PDSCH receive time for a same {serving cell or serving cell combination, PDCCH monitoring occasion}.

In some embodiments, counting based on the PDSCH receive time for the same {serving cell or serving cell combination, PDCCH monitoring occasion} is counting based on the PDSCH receive time for two or more pieces of first DCI with the same PDCCH monitoring occasion and the same serving cell or serving cell combination.

In an implementation, a cyclic execution order in a counting manner of the C-DAI in the at least one piece of first DCI is as follows.

First, counting is performed in an ascending/descending order of PDSCH receive times (for example, reception start time/end time) for the same {serving cell/serving cell combination, PDCCH monitoring occasion}-pair.

Then, counting is performed in an ascending/descending order of indexes of serving cells or indexes of serving cell combinations. The serving cell combination includes at least one serving cell.

Finally, counting is performed in an ascending/descending order of indexes of PDCCH monitoring occasions.

Based on the above cyclic order, logic in a counting manner of the C-DAI in the at least one piece of first DCI is as follows.

Based on the above cyclic order, for C-DAI counting, the outermost cycle is counting in an ascending/descending order of indexes of PDCCH monitoring occasions, the second cycle from outside to inside is counting in an ascending/descending order of indexes of serving cells or indexes of serving cell combinations for the same PDCCH monitoring occasion, and the innermost cycle is counting in an ascending/descending order of PDSCH receive times for the same PDCCH monitoring occasion and the same index of the serving cell or index of the serving cell combination.

In some embodiments, the HARQ-ACK codebook includes bits of the HARQ-ACK corresponding to each of the at least one piece of first DCI. A number of bits of the type-2 HARQ-ACK corresponding to the first DCI is determined by at least one of:
an optional number of the at least two PDSCHs scheduled by the first DCI;
a maximum number of the at least two PDSCHs scheduled by the first DCI; or
a maximum number of CWs schedulable by the first DCI for each of P1 serving cells, wherein P1 is an integer greater than or equal to 1.

The number of PDSCHs schedulable by the first DCI varies. For example, in the case that the first DCI schedules 2 PDSCHs or 3 PDSCHs, an optional number of the at least two PDSCHs scheduled by the first DCI is 2 or 3.

The maximum number of CWs schedulable by the first DCI for each of the P1 serving cells is a maximum number of CWs that the first DCI is allowed to schedule for each of the P1 serving cells. For example, in the case that a number of CWs that the first DCI is allowed to schedule for a serving cell is 1 or 2, the maximum number of CWs schedulable by the first DCI for the serving cell is 2. One piece of DCI schedules P1 serving cells. For each of the P1 serving cells, a maximum number of schedulable CWs is present.

In the embodiments of the present disclosure, the HARQ-ACK bits corresponding to the first DCI is M. M is determined based on at least one of: a value of N, a maximum value of N, or a maximum number C of CWs schedulable by each piece of DCI in some embodiments. The maximum number of CWs schedulable by each piece of DCI is configured for each serving cell or each bandwidth part (BWP).

In some embodiments, the number of the bits of the HARQ-ACK corresponding to the first DCI is determined by the maximum number of the at least two PDSCHs scheduled by the first DCI and a maximum value of P1 maximum numbers of CWs. The P1 maximum numbers of CWs are the maximum numbers of CWs schedulable by the first DCI for the P1 serving cells. In some embodiments, the number of the bits of the type-2 HARQ-ACK corresponding to the first DCI is:
a product of the maximum number of the at least two PDSCHs scheduled by the first DCI and the maximum value of the P1 maximum numbers of CWs.

In some embodiments, the P1 serving cells are:
serving cells in a PUCCH group/cell group corresponding to the first DCI;
serving cells in a serving cell combination schedulable by the first DCI; or
all serving cells configured for the terminal device.

The serving cell combination schedulable by the first DCI is in all serving cell combinations that the first DCI is allowed to schedule. For example, the first DCI is allowed to schedule eight serving cell combinations. The first DCI schedules a first serving cell combination therein during each actual scheduling.

In the embodiments of the present disclosure, a manner of determining M includes:
manner 1: M=max{N}*max{Cj}, wherein j = 1, 2, ..., P, and P represents:
(1) option 1: a number of cells in the PUCCH group/cell group corresponding to the first DCI;
(2) option 2: a number of cells in the cell combination schedulable by the first DCI; and
(3) option 3: a total number of all serving cells configured for the terminal.

Cj represents a maximum number of CWs schedulable by the first DCI for a serving cell j, and max represents obtaining a maximum value.

The maximum value of N corresponds to each terminal device (per UE). Regardless of a carrier or SS related to the first DCI, the maximum value of N represents a maximum number of carriers that the first DCI may schedule. In the case that Nmax is present for different carriers or different SSs related to the first DCI, the above formula is changed to M=max{Nmax}*max{Cj}, ensuring that the first term is the maximum value of N from the UE perspective.

It is assumed that the network configures a total of 4 serving cells for the terminal, i.e., serving cells 1 to 4. The four serving cells belong to a same PUCCH group. The cell combinations that the first DCI is allowed to schedule are as shown in Table 1. The first DCI actually schedules cell 1+cell 4 (namely the cell combination 1 in Table 1). Based on Table 1, the maximum value of N is 3. That is, a maximum number of serving cells schedulable by the first DCI is 3. A maximum number C1 to C4 of CWs schedulable by each piece of DCI corresponding to the cells 1 to 4 is 1/1/1/2. The PDSCH 1 scheduled by the first DCI corresponds to 1 CW. The PDSCH 4 corresponds to 2 CWs.

In manner 1, max{N}=3, max{Cj}=2, and M=3*2=6. Each piece of first DCI corresponds to 6 HARQ-ACK bits, wherein three bits of true HARQ-ACK information are all ACKs. The three ACKs correspond to cell 1 CW 1, cell 2 CW 1, and cell 2 CW 2 in sequence. The 6 HARQ-ACK bits are A (namely ACK), A, A, N (namely negative acknowledgment (NACK)), N, and N; or A, N, A, A, N, and N. In the six bits, the first four bits correspond to CW 1 and CW 2 of the cell 1 and CW 1 and CW 2 of the cell 4 in sequence, or correspond to CW 1 and CW 2 of the cell 4 and CW 1 and CW 2 of the cell 1 in sequence; and the last two bits are two padding bits.

In some embodiments, the at least two PDSCHs scheduled by the first DCI are PDSCHs corresponding to serving cells in a first serving cell combination. The first serving cell combination is one of m serving cell combinations preconfigured by the system, wherein m is an integer greater than or equal to 1. The number of the bits of the HARQ-ACK corresponding to the first DCI is determined by first values corresponding to the m serving cell combinations. The first value is determined based on at least one of a maximum number of CWs schedulable by the first DCI for each of serving cells in the serving cell combination corresponding to the first value and a number of serving cells corresponding to the first value.

In some embodiments, the number of the bits of the HARQ-ACK corresponding to the first DCI is a maximum value of the first values corresponding to the m serving cell combinations.

In some embodiments, a first value corresponding to a second serving cell combination in the m serving cell combinations includes:
a product of a number of serving cells in the second serving cell combination and a maximum value of maximum numbers of CWs schedulable by the first DCI for the serving cells in the second serving cell combination; or
a sum of the maximum numbers of CWs schedulable by the first DCI for the serving cells in the second serving cell combination, wherein the second serving cell combination is any one of the m serving cell combinations.

In the embodiments of the present disclosure, a manner of determining M includes:
manner 2: M=max{Mm}, as shown in Table 1, for each cell combination m:
(1) option 1: Mm=Nm*max {Cj}, wherein Nm represents a number of cells in the cell combination m; and
(2) option 2: Mm=Σ{Cj }Cj, wherein j = 1, 2, ..., P, and P represents a number of cells in the cell combination m.

In manner 2 (especially option 2), the HARQ-ACK codebook involves a small number of bits, leading to low PUCCH overheads.

In manner 2, in the case that the configuration information of the cell combinations is as shown in Table 1, the cell combinations 1 to 8 corresponding to M1 to M8 are as shown in Table 2.

**Table 2**

| Cell combination index | Co-scheduled cell | Option 1 | Option 2 |
|---|---|---|---|
| 1 | cell 1+cell 4 | M1=N1* max{Cj}=2*2=4 | M1=Σ *Cj*=C1+C4=3 |
| 2 | cell 2+cell 3 | M2=N2* max{Cj}=2*1=2 | M2=Σ *Cj*=C2+C3=2 |
| 3 | cell 1+cell 2 | M3=N3* max{Cj}=2*1=2 | M3=Σ *Cj*=Cl+C2=2 |
| 4 | cell 1+cell 3 | M4=N4* max{Cj}=2*1=2 | M4=Σ *Cj*=C1+C3=2 |
| 5 | cell 2+cell 4 | M5=N5* max{Cj}=2*2=4 | M5=Σ *Cj*=C2+C4=3 |
| 6 | cell 3+cell 4 | M6=N6* max{Cj}=2*2=4 | M6=Σ *Cj*=C3+C4=3 |
| 7 | cell 1+cell 2+cell 3 | M7=N7* max{Cj}=3*1=3 | M7=Σ *Cj*=C1+C2+C3=3 |
| 8 | cell 2+cell 3+cell 4 | M8=N8* max{Cj}=3*2=6 | M8=Σ *Cj*=C2+C3+C4=4 |

M=max{Mm}= 6 (option 1), and M=max{Mm}= 4 (option 2). Each piece of first DCI corresponds to six HARQ-ACK bits for option 1 and four HARQ-ACK bits for option 2, wherein three bits of the true HARQ-ACK information are all ACKs. The 3 ACKs correspond to cell 1 CW1, cell 2 CW1, and cell 2 CW2 in sequence. The six HARQ-ACK bits are A, A, A, N, N, and N (option 1). The four HARQ-ACK bits are A, A, A, and N (option 2). In the 6 HARQ-ACK bits, the first three bits correspond to cell 1 CW1, cell 2 CW1, and cell 2 CW2 respectively, and the last three bits are padding bits. In the four HARQ-ACK bits, the first three bits correspond to cell 1 CW1, cell 2 CW1, and cell 2 CW2 respectively, and the last bit is a padding bit.

With the number of the bits of the HARQ-ACK corresponding to each of the at least one piece of first DCI, the terminal device constructs the HARQ-ACK codebook of the at least one piece of first DCI in an ascending/descending order of the C-DAI in the at least one piece of first DCI. In other words, in the HARQ-ACK codebook, the HARQ-ACK bits of the at least one piece of first DCI is arranged in an ascending/descending order of the C-DAI in the at least one piece of first DCI.

In some embodiments, an order of HARQ-ACK bits corresponding to the at least two PDSCHs scheduled by the first DCI is:
an ascending or descending order of CW indexes for a same serving cell; and
an ascending or descending order of indexes of serving cells for different serving cells.

In the M bits, the order of the HARQ-ACK bits corresponding to the at least two PDSCHs scheduled by the first DCI is:
(1) an ascending or descending order of CW indexes for the same serving cell; and
(2) an ascending or descending order of indexes of serving cells.

For example, for two PDSCHs in a same serving cell that are scheduled by the first DCI, assuming that the PDSCH 1 corresponds to a CW 1 and the PDSCH 2 corresponds to a CW 2, and assuming that the HARQ-ACK bit corresponding to the PDSCH 1 is N and the HARQ-ACK bit corresponding to the PDSCH 2 is A, then in the ascending order, the order of the HARQ-ACK bits corresponding to the PDSCHs scheduled by the first DCI is N and A; and in the descending order, the order of the HARQ-ACK bits corresponding to the PDSCHs scheduled by the first DCI is A and N.

For example, for a PDSCH 1 in a serving cell 1 and a PDSCH 2 in a serving cell 2 that are scheduled by the first DCI, and assuming that a HARQ-ACK bit corresponding to the PDSCH 1 is N and a HARQ-ACK bit corresponding to the PDSCH 2 is A, then in the ascending order, the order of the HARQ-ACK bits corresponding to the PDSCHs scheduled by the first DCI is N and A; and in the descending order, the order of the HARQ-ACK bits corresponding to the PDSCHs scheduled by the first DCI is A and N.

In some embodiments, in the case that the at least two PDSCHs scheduled by the first DCI are the PDSCHs corresponding to the serving cells in the first serving cell combination, and the sum Mm of the maximum numbers of CWs schedulable by the first DCI for the cells in the second serving cell combination is less than the number M of the bits of the HARQ-ACK of the first DCI, the first Mm bits of the HARQ-ACK of the first DCI are set based on the C-DAI in the first DCI, and the last M minus Mm bits of the HARQ-ACK of the first DCI are first information.

The first information may be NACK or another value.

In other words, in the embodiments of the present disclosure, in the case that the type-2 HARQ-ACK codebook is constructed based on the C-DAI in the at least one piece of first DCI, the terminal device sets the first Mm bits of the HARQ-ACK of the first DCI based on the C-DAI in the first DCI and set the last M minus Mm bits of the HARQ-ACK of the first DCI to NACK in the case that the at least two PDSCHs scheduled by the first DCI are the PDSCHs corresponding to the serving cells in the first serving cell combination and a second value is less than the number M of the bits of the HARQ-ACK of the first DCI.

In some embodiments, the second value is determined by at least one of a maximum number of CWs schedulable by the first DCI for each of the serving cells in the first serving cell combination and a number of the serving cells in the first serving cell combination.

In some embodiments, the second value includes:
a sum of the maximum numbers of CWs schedulable by the first DCI for the serving cells in the first serving cell combination, or a product of the number of the serving cells in the first serving cell combination and a maximum value of the maximum numbers of CWs schedulable by the first DCI for the serving cells in the first serving cell combination.

For the cell combination m scheduled by the first DCI, in the case that Mm=Σ{Cj} is less than M, the terminal generates NACK or another specified value for the last M minus Mm bits of the HARQ-ACK.

The solution shown in 603 is used to determine the number of the bits of the HARQ-ACK generated for each piece of first DCI and the order of the HARQ-ACK bits corresponding to the at least two PDSCHs scheduled by the first DCI in the generated HARQ-ACK information bits.

In 604, the terminal device provides, based on the type-2 HARQ-ACK codebook, HARQ feedback on the PDSCHs scheduled by the at least one piece of first DCI. Correspondingly, the network device receives the HARQ-ACK codebook fed back by the terminal device.

The terminal device transmits the type-2 HARQ-ACK codebook to the network device as a HARQ-ACK feedback result of the PDSCHs scheduled by the at least one piece of first DCI.

In summary, in the technical solution according to the embodiments of the present disclosure, in the case that PDSCHs are scheduled by at least one piece of DCI and each piece of DCI schedules at least two PDSCHs, the network device transmits the first DCI used for scheduling the at least two PDSCHs and carrying the C-DAI, and the terminal device constructs the type-2 HARQ-ACK codebook using the C-DAI carried in the DCI, such that a type-2 codebook construction solution used when HARQ-ACK information corresponding to a plurality of PDSCHs scheduled by one piece of DCI is fed back over a same PUCCH is provided, a HARQ feedback solution used when a plurality of PDSCHs are scheduled by one piece of DCI is improved, and HARQ feedback efficiency is enhanced.

FIG. 8 is a block diagram of an apparatus for constructing a HARQ codebook according to some embodiments of the present disclosure. The apparatus for constructing the HARQ codebook 800 has functions performed by the terminal device in the above method shown in FIG. 4 or FIG. 6. The apparatus for constructing HARQ codebook 800 may be a terminal device. As shown in FIG. 8, the apparatus includes:
a receiving module 801, configured to receive at least one piece of first DCI, wherein the first DCI is used for scheduling at least two PDSCHs, the at least two PDSCHs correspond to at least one serving cell, and the first DCI includes a C-DAI; and
a constructing module 802, configured to construct a type-2 HARQ-ACK codebook based on the C-DAI in the at least one piece of first DCI.

In some embodiments, the apparatus further includes a transmitting module configured to provide, based on the type-2 HARQ-ACK codebook, HARQ feedback on the PDSCHs scheduled by the at least one piece of first DCI.

In some embodiments, a counting manner of the C-DAI in the at least one piece of first DCI includes:
counting based on indexes of serving cells or indexes of serving cell combinations, wherein the serving cell combination includes at least one serving cell.

In some embodiments, counting based on the indexes of the serving cells includes:
counting in an ascending or descending order based on a minimum value of indexes of serving cells corresponding to the at least two PDSCHs scheduled by the first DCI; or
counting in an ascending or descending order based on a maximum value of indexes of serving cells corresponding to the at least two PDSCHs scheduled by the first DCI.

In some embodiments, counting based on the indexes of the serving cell combinations includes:
counting in an ascending or descending order of indexes of serving cell combinations scheduled by the first DCI.

In some embodiments, counting based on the indexes of the serving cells includes:
counting in an ascending or descending order of indexes of serving cells corresponding to first PDSCHs scheduled by the first DCI.

Each of the first PDSCH is a PDSCH with an earliest start time in the at least two PDSCHs scheduled by the first DCI.

Alternatively, each of the first PDSCHs is a PDSCH with a latest start time in the at least two PDSCHs scheduled by the first DCI.

Alternatively, each of the first PDSCHs is a PDSCH with an earliest end time in the at least two PDSCHs scheduled by the first DCI.

Alternatively, each of the first PDSCHs is a PDSCH with a latest end time in the at least two PDSCHs scheduled by the first DCI.

In some embodiments, counting based on the indexes of the serving cells includes:
counting in an ascending or descending order of indexes of serving cells corresponding to serving cells related to the first DCI.

In some embodiments, a counting manner of the C-DAI in the at least one piece of first DCI further includes: counting based on at least one of an index of a PDCCH monitoring occasion or a PDSCH receive time.

In some embodiments, counting based on the indexes of the serving cells or the indexes of the serving cell combinations includes:
counting based on the indexes of the serving cells or the indexes of the serving cell combinations in the case that PDCCH monitoring occasions are identical.

In some embodiments, the counting manner of the C-DAI in the first DCI further includes:
counting based on the PDSCH receive time for a same {serving cell or serving cell combination, PDCCH monitoring occasion}.

In some embodiments, the HARQ-ACK codebook includes bits of HARQ-ACK corresponding to the at least one piece of first DCI respectively. A number of bits of the HARQ-ACK corresponding to the first DCI is determined by at least one of:
an optional number of the at least two PDSCHs scheduled by the first DCI;
a maximum number of the at least two PDSCHs scheduled by the first DCI; or
a maximum number of CWs schedulable by the first DCI for each of P1 serving cells, wherein P1 is an integer greater than or equal to 1.

In some embodiments, the number of the bits of the HARQ-ACK corresponding to the first DCI is determined by the maximum number of the at least two PDSCHs scheduled by the first DCI and a maximum value of P1 maximum numbers of CWs. The P1 maximum numbers of CWs are the maximum numbers of CWs schedulable by the first DCI for the P1 serving cells.

In some embodiments, the number of the bits of the HARQ-ACK corresponding to the first DCI is:
a product of the maximum number of the at least two PDSCHs scheduled by the first DCI and the maximum value of the P1 maximum numbers of CWs.

In some embodiments, the P1 serving cells are:
serving cells in a PUCCH group/cell group corresponding to the first DCI;
serving cells in a serving cell combination schedulable by the first DCI; or
all serving cells configured for the terminal device.

In some embodiments, the at least two PDSCHs scheduled by the first DCI are PDSCHs corresponding to serving cells in a first serving cell combination. The first serving cell combination is one of m serving cell combinations preconfigured by a system, wherein m is an integer greater than or equal to 1.

In some embodiments, the number of the bits of the HARQ-ACK corresponding to the first DCI is determined by first values corresponding to the m serving cell combinations.

The first value is determined based on at least one of a maximum number of CWs schedulable by the first DCI for each of serving cells in a serving cell combination corresponding to the first value or a number of serving cells in the serving cell combination corresponding to the first value.

In some embodiments, the number of the bits of the HARQ-ACK corresponding to the first DCI is:
a maximum value of the first values corresponding to the m serving cell combinations.

In some embodiments, a first value corresponding to a second serving cell combination of the m serving cell combinations includes:
a product of a number of serving cells in the second serving cell combination and a maximum value of maximum numbers of CWs schedulable by the first DCI for the serving cells in the second serving cell combination; or
a sum of the maximum numbers of CWs schedulable by the first DCI for the serving cells in the second serving cell combination.

The second serving cell combination is any one of the m serving cell combinations.

In some embodiments, an order of HARQ-ACK bits corresponding to the at least two PDSCHs scheduled by the first DCI is:
an ascending or descending order of CW indexes for a same serving cell; and
an ascending or descending order of indexes of serving cells for different serving cells.

In some embodiments, constructing the type-2 HARQ-ACK codebook based on the C-DAI in the first DCI includes:
In a case that the at least two PDSCHs scheduled by the first DCI are the PDSCHs corresponding to the serving cells in the first serving cell combination, and a second value is less than the number M of HARQ-ACK bits of the first DCI, the last M minus second value bits of the HARQ-ACK of the first DCI are determined as first information. The M minus second value bits indicates that a number of bits is a difference between M and the second value.

In some embodiments, the second value is determined based on at least one of a maximum number of CWs schedulable by the first DCI for each of the serving cells in the first serving cell combination or a number of the serving cells in the first serving cell combination.

In some embodiments, the second value includes:
a sum of the maximum numbers of CWs schedulable by the first DCI for the serving cells in the first serving cell combination; or
a product of the number of the serving cells in the first serving cell combination and a maximum value of the maximum numbers of CWs schedulable by the first DCI for the serving cells in the first serving cell combination.

FIG. 9 is a block diagram of an apparatus for constructing a HARQ codebook according to some embodiments of the present disclosure. The apparatus for constructing the HARQ codebook 900 has functions performed by the network device in the above method shown in FIG. 5 or FIG. 6. The apparatus for constructing the HARQ codebook 900 may be a network device. As shown in FIG. 9, the apparatus includes:
a transmitting module 901, configured to transmit at least one piece of first DCI. A C-DAI in the at least one piece of first DCI is configured to construct a type-2 HARQ-ACK codebook by a terminal device. The first DCI is used for scheduling at least two PDSCHs. The at least two PDSCHs correspond to at least one serving cell.

In some embodiments, the apparatus further includes a determining module, configured to generate, determine, or configure the at least one piece of first DCI.

In some embodiments, counting the C-DAI in the first DCI includes:
counting based on indexes of serving cells or indexes of serving cell combinations, wherein each of the serving cell combinations includes at least one serving cell.

In some embodiments, counting based on the indexes of the serving cells includes:
counting in an ascending or descending order based on a minimum value of indexes of serving cells corresponding to the at least two PDSCHs scheduled by the first DCI; or
counting in an ascending or descending order based on a maximum value of indexes of serving cells corresponding to the at least two PDSCHs scheduled by the first DCI.

In some embodiments, counting based on the indexes of the serving cell combinations includes:
counting in an ascending or descending order of indexes of serving cell combinations scheduled by the first DCI.

In some embodiments, counting based on the indexes of the serving cells includes:
counting in an ascending or descending order of indexes of serving cells corresponding to first PDSCHs scheduled by the first DCI.

Each of the first PDSCHs is a PDSCH with an earliest start time in the at least two PDSCHs scheduled by the first DCI.

Alternatively, each of the first PDSCHs is a PDSCH with a latest start time in the at least two PDSCHs scheduled by the first DCI.

Alternatively, each of the first PDSCHs is a PDSCH with an earliest end time in the at least two PDSCHs scheduled by the first DCI.

Alternatively, each of the first PDSCHs is a PDSCH with a latest end time in the at least two PDSCHs scheduled by the first DCI.

In some embodiments, counting based on the indexes of the serving cells includes:
counting in ascending or descending order of the indexes of the serving cell corresponding to a serving cell related to the first DCI.

In some embodiments, a counting manner of the C-DAI in the at least one piece of first DCI further includes: counting based on at least one of an index of a PDCCH monitoring occasion or a PDSCH receive time.

In some embodiments, counting based on the indexes of the serving cells or the indexes of the serving cell combinations includes:
counting based on the indexes of the serving cells or the indexes of the serving cell combinations in a case that PDCCH monitoring occasions are identical.

In some embodiments, the counting manner of the C-DAI in the first DCI further includes:
counting based on the PDSCH receive time for a same {serving cell or serving cell combination, PDCCH monitoring occasion}.

In some embodiments, the HARQ-ACK codebook includes bits of HARQ-ACK corresponding to the at least one piece of first DCI respectively. A number of bits of the HARQ-ACK corresponding to the first DCI is determined by at least one of:
an optional number of the at least two PDSCHs scheduled by the first DCI;
a maximum number of the at least two PDSCHs scheduled by the first DCI; or
a maximum number of CWs schedulable by the first DCI for each of P1 serving cells, wherein P1 is an integer greater than or equal to 1.

In some embodiments, the number of the bits of the HARQ-ACK corresponding to the first DCI is determined by the maximum number of the at least two PDSCHs scheduled by the first DCI and a maximum value of P1 maximum numbers of CWs. The P1 maximum numbers of CWs are the maximum numbers of CWs schedulable by the first DCI for the P1 serving cells.

In some embodiments, the number of the bits of the HARQ-ACK corresponding to the first DCI is:
a product of the maximum number of the at least two PDSCHs scheduled by the first DCI and the maximum value of the P1 maximum numbers of CWs.

In some embodiments, the P1 serving cells are:
serving cells in a PUCCH group/cell group corresponding to the first DCI;
serving cells in a serving cell combination schedulable by the first DCI; or
all serving cells configured for the terminal device.

In some embodiments, the at least two PDSCHs scheduled by the first DCI are PDSCHs corresponding to serving cells in a first serving cell combination. The first serving cell combination is one of m serving cell combinations preconfigured by a system, wherein m is an integer greater than or equal to 1.

In some embodiments, the number of the bits of the HARQ-ACK corresponding to the first DCI is determined by first values corresponding to the m serving cell combinations.

The first value is determined based on at least one of a maximum number of CWs schedulable by the first DCI for each of serving cells in a serving cell combination corresponding to the first value or a number of serving cells in the serving cell combination corresponding to the first value.

In some embodiments, the number of the bits of the HARQ-ACK corresponding to the first DCI is:
a maximum value of the first values corresponding to the m serving cell combinations.

In some embodiments, a first value corresponding to a second serving cell combination of the m serving cell combinations includes:
a product of a number of serving cells in the second serving cell combination and a maximum value of maximum numbers of CWs schedulable by the first DCI for the serving cells in the second serving cell combination; or
a sum of the maximum numbers of CWs schedulable by the first DCI for the serving cells in the second serving cell combination, wherein the second serving cell combination is any one of the m serving cell combinations.

In some embodiments, an order of HARQ-ACK bits corresponding to the at least two PDSCHs scheduled by the first DCI is:
an ascending or descending order of CW indexes for a same serving cell; and
an ascending or descending order of indexes of serving cells for different serving cells.

In some embodiments, the apparatus further includes:
a receiving module, configured to receive the HARQ-ACK codebook fed back by the terminal device.

In a case that the at least two PDSCHs scheduled by the first DCI are the PDSCHs corresponding to the serving cells in the first serving cell combination, and a second value is less than the number M of the bits of HARQ-ACK of the first DCI, the last M minus second value bits of the HARQ-ACK of the first DCI are first information.

In some embodiments, the second value is determined by at least one of maximum numbers of CWs schedulable by the first DCI for the serving cells in the first serving cell combination or a number of the serving cells in the first serving cell combination.

In some embodiments, the second value includes:
a sum of the maximum numbers of CWs schedulable by the first DCI for the serving cells in the first serving cell combination; or
a product of the number of the serving cells in the first serving cell combination and a maximum value of the maximum numbers of CWs schedulable by the first DCI for the serving cells in the first serving cell combination.

It should be noted that when the apparatus provided in the above embodiments implements its functions, division into the above functional modules is merely used as an example. In practical application, the above functions may be allocated to and completed by different functional modules as required, that is, an internal structure of the apparatus is divided into different functional modules to complete all or some of the above functions.

Specific manners of performing operations by the modules in the apparatus in the above embodiments are described in detail in the embodiments of the related method, which are not repeated herein.

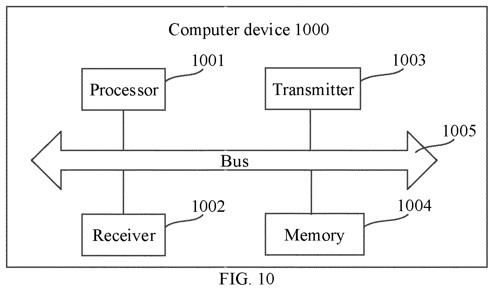

FIG. 10 is a schematic structural diagram of a computer device 1000 according to some embodiments of the present disclosure. The computer device 1000 includes a processor 1001, a receiver 1002, a transmitter 1003, a memory 1004, and a bus 1005.

The processor 1001 includes one or more processing cores. The processor 1001 runs a software program and module to execute various functional applications and information processing.

The receiver 1002 and the transmitter 1003 are implemented as a communication component. The communication component is a communication chip. The communication chip is also referred to as a transceiver.

The memory 1004 is connected to the processor 1001 via the bus 1005.

The memory 1004 is configured to store a computer program. The processor 1001 is configured to execute the computer program to implement each step in the above method embodiments.

In addition, the memory 1004 is implemented by any type of volatile or non-volatile storage device or a combination thereof. The volatile or non-volatile storage device includes but not limited to a magnetic disk or an optical disc, an electrically erasable programmable read-only memory (EEPROM), an erasable programmable read-only memory (EPROM), a static random access memory (SRAM), a read-only memory (ROM), a magnetic memory, a flash memory, and a programmable ROM (PROM).

In an exemplary solution, in the case that the computer device 1000 is implemented as the above terminal device, the transceiver is configured to receive at least one piece of first DCI. The first DCI is used for scheduling at least two PDSCHs. The at least two PDSCHs correspond to at least one serving cell. The first DCI includes a C-DAI.

The processor is configured to construct a type-2 HARQ-ACK codebook based on the C-DAI in the at least one piece of first DCI.

The processor 1001 and/or the transceiver in the computer device 1000 is configured to implement the functions of the modules in the apparatus shown in FIG. 8. For example, the transceiver is configured to implement the functions of the receiving module and the transmitting module in the apparatus shown in FIG. 8, and the processor is configured to implement the function of the constructing module in the apparatus shown in FIG. 8. The processes performed by the processor 1001 and/or the transceiver in the computer device 1000 are referred to the processes performed by the terminal device in the above method shown in FIG. 4 or FIG. 6.

In an exemplary solution, when the computer device 1000 is implemented as the above network device, the transceiver is configured to transmit at least one piece of first DCI. A C-DAI in the at least one piece of first DCI is configured to construct a type-2 HARQ-ACK codebook by a terminal device. The first DCI is used for scheduling at least two PDSCHs. The at least two PDSCHs correspond to at least one serving cell.

The processor 1001 and/or the transceiver in the computer device 1000 is configured to implement the functions of the modules in the apparatus shown in FIG. 9. For example, the transceiver is configured to implement the functions of the receiving module and the transmitting module in the apparatus shown in FIG. 9, and the processor is configured to implement the function of the determining module in the apparatus shown in FIG. 9. The processes performed by the processor 1001 and/or the transceiver in the computer device 1000 are referred to the processes performed by the network device in the above method shown in FIG. 5 or FIG. 6.

The embodiments of the present disclosure further provide a computer-readable storage medium. The storage medium stores one or more computer programs. The one or more computer programs, when loaded and run by a processor, cause the process to perform all or some of the processes performed by the terminal device or network device in the above method shown in FIG. 4, FIG. 5, or FIG. 6.

The present disclosure further provides a chip. The chip, when running on a computer device, causes the computer device to perform all or some of the processes performed by the terminal device or network device in the above method shown in FIG. 4, FIG. 5, or FIG. 6.

The present disclosure further provides a computer program product. The computer program product includes one or more computer instructions. The one or more computer instructions are stored in a computer-readable storage medium. A processor of a computer device, when loading and executing the one or more computer instructions, cause the computer device to perform all or some of the processes performed by the terminal device or network device in the above method shown in FIG. 4, FIG. 5, or FIG. 6.

The present disclosure further provides a computer program. The computer program, when loaded and run by a processor of a computer device, causes the computer device to perform all or some of the processes performed by the terminal device or network device in the above method shown in FIG. 4, FIG. 5, or FIG. 6.

Those skilled in the art should be aware that in the above one or more examples, the functions described in the embodiments of the present disclosure may be implemented by hardware, software, firmware, or any combination thereof. When implemented by software, the functions may be stored in a computer-readable medium or transmitted as at least one instruction or code on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above are merely exemplary embodiments of the present disclosure and are not intended to limit the present disclosure. The invention is therefore solely defined by the appended claims.

## Claims

1. A method for constructing a hybrid automatic repeat request, HARQ, codebook, performed by a terminal device, the method comprising:
receiving (401) at least two pieces of first downlink control information, DCI, wherein each piece of first DCI is used for scheduling at least two physical downlink shared channels, PDSCHs, the at least two PDSCHs scheduled by the each piece of first DCI corresponding to different serving cells, and the each piece of first DCI comprises a counter-downlink assignment index, C-DAI; and
constructing (402) a type-2 HARQ-acknowledgment, HARQ-ACK, codebook based on the C-DAI in the at least two pieces of first DCI;
wherein a counting manner of the C-DAI in the at least two pieces of first DCI comprises: counting based on indexes of serving cell;
wherein counting based on the indexes of the serving cells comprises: counting in an ascending order based on a smallest serving cell index corresponding to the at least two PDSCHs scheduled by the each piece of first DCI.

2. The method according to claim 1, wherein the counting manner of the C-DAI in the at least two pieces of first DCI further comprises: counting based on at least one of an index of a PDCCH monitoring occasion or a PDSCH receive time; or
counting based on the indexes of the serving cell comprises: counting based on the indexes of the serving cell in a case that indexes of PDCCH monitoring occasions are identical.

3. The method according to claim 1 or 2, wherein counting of the C-DAI in the at least two pieces of first DCI further comprises:
counting based on the PDSCH receive time for a same {serving cell, PDCCH monitoring occasion}.

4. The method according to any one of claims 1 to 3, wherein the HARQ-ACK codebook comprises bits of HARQ-ACK corresponding to the at least two pieces of first DCI respectively; and
a number of the bits of the HARQ-ACK corresponding to the first DCI is determined by at least one of:
an optional number of the at least two PDSCHs scheduled by the first DCI;
a maximum number of the at least two PDSCHs scheduled by the first DCI; or
a maximum number of codewords, CWs, schedulable by the first DCI for each of P1 serving cells, wherein P1 is an integer greater than or equal to 1.

5. The method according to claim 4, wherein the at least two PDSCHs scheduled by the first DCI are PDSCHs corresponding to serving cells in a first serving cell combination; and the first serving cell combination is one of m serving cell combinations preconfigured by a system, wherein m is an integer greater than or equal to 1.

6. The method according to claim 5, wherein the number of the bits of the HARQ-ACK corresponding to the first DCI is determined by first values corresponding to the m serving cell combinations;
wherein the first value is determined based on at least one of a maximum number of CWs schedulable by the first DCI for each of serving cells in a serving cell combination corresponding to the first value or a number of serving cells in the serving cell combination corresponding to the first value.

7. The method according to claim 6, wherein the number of the bits of the HARQ-ACK corresponding to the first DCI is:
a maximum value of the first values corresponding to the m serving cell combinations; and
a first value corresponding to a second serving cell combination of the m serving cell combinations comprises:
a product of a number of serving cells in the second serving cell combination and a maximum value of maximum numbers of CWs schedulable by the first DCI for the serving cells in the second serving cell combination; or
a sum of the maximum numbers of CWs schedulable by the first DCI for the serving cells in the second serving cell combination, wherein the second serving cell combination is any one of the m serving cell combinations.

8. The method according to any one of claims 1 to 7, wherein an order of bits of HARQ-ACK corresponding to the at least two PDSCHs scheduled by the first DCI is:
an ascending or descending order of CW indexes for a same serving cell; and
an ascending or descending order of indexes of serving cells for different serving cells.

9. The method according to any one of claims 1 to 8, wherein constructing (402) the type-2 HARQ-ACK codebook based on the C-DAI in the first DCI comprises:
in a case that the at least two PDSCHs scheduled by the first DCI are PDSCHs corresponding to serving cells in the first serving cell combination, and a second value is less than a number M of bits of HARQ-ACK of the first DCI, determining last M minus second value bits in the HARQ-ACK codebook as first information; and
the second value is determined based on at least one of a maximum number of CWs schedulable by the first DCI for each of the serving cells in the first serving cell combination or a number of the serving cells in the first serving cell combination.

10. The method according to claim 9, wherein the second value comprises:
a sum of the maximum numbers of CWs schedulable by the first DCI for the serving cells in the first serving cell combination; or
a product of the number of the serving cells in the first serving cell combination and a maximum value of the maximum numbers of CWs schedulable by the first DCI for the serving cells in the first serving cell combination.

11. A terminal device configured to construct a hybrid automatic repeat request, HARQ, codebook, comprising:
a receiving module (801), configured to receive at least two pieces of first downlink control information, DCI, wherein each piece of first DCI is used for scheduling at least two physical downlink shared channels, PDSCHs, the at least two PDSCHs scheduled by the each piece of first DCI correspond to different serving cells, and the each piece of first DCI comprises a counter-downlink assignment index, C-DAI; and
a constructing module (802), configured to construct a type-2 HARQ-acknowledgment, HARQ-ACK, codebook based on the C-DAI in the at least two pieces of first DCI;
wherein a counting manner of the C-DAI in the at least two pieces of first DCI comprises: counting based on indexes of serving cell;
wherein counting based on the indexes of the serving cell comprises: counting in an ascending order based on a smallest serving cell index corresponding to the at least two PDSCHs scheduled by the each piece of first DCI.

12. The terminal device according to claim 11, wherein the counting manner of the C-DAI in the at least two pieces of first DCI further comprises: counting based on at least one of an index of a PDCCH monitoring occasion or a PDSCH receive time; or
counting based on the indexes of the serving cell comprises: counting based on the indexes of the serving cell in a case that indexes of PDCCH monitoring occasions are identical.

13. The terminal device according to claim 11 or 12, wherein the counting manner of the C-DAI in the at least two pieces of first DCI further comprises:
counting based on the PDSCH receive time for a same {serving cell, PDCCH monitoring occasion}.

14. A network device configured to construct a hybrid automatic repeat request, HARQ, codebook, comprising:
a transmitting module (901), configured to transmit at least two pieces of first downlink control information, DCI, wherein a counter-downlink assignment index, C-DAI, in the at least two pieces of first DCI is configured to construct a type-2 HARQ-acknowledgment, HARQ-ACK, codebook by a terminal device, each piece of first DCI is used for scheduling at least two physical downlink shared channels, PDSCHs, and the at least two PDSCHs scheduled by the each piece of first DCI correspond to different serving cells;
wherein a counting manner of the C-DAI in the at least two pieces of first DCI comprises: counting based on indexes of serving cell;
wherein counting based on the indexes of the serving cells comprises: counting in an ascending order based on a smallest serving cell index corresponding to the at least two PDSCHs scheduled by the each piece of first DCI.

15. The network device according to claim 14, wherein the counting manner of the C-DAI in the at least two pieces of first DCI further comprises: counting based on at least one of an index of a PDCCH monitoring occasion or a PDSCH receive time; or
counting based on the indexes of the serving cell comprises: counting based on the indexes of the serving cell in a case that indexes of PDCCH monitoring occasions are identical.

## Patentansprüche

1. Verfahren zum Konstruieren eines Hybrid-Automatic-Repeat-Request-, HARQ-, Codebuchs, durchgeführt von einem Endgerät, wobei das Verfahren umfasst:
Empfangen (401) von mindestens zwei Stücken einer ersten Downlink-Steuerinformation, DCI, wobei jedes Stück der ersten DCI zum Planen von mindestens zwei physischen gemeinsam genutzten Downlink-Kanälen, PDSCHs, verwendet wird, wobei die mindestens zwei durch jedes Stück der ersten DCI geplanten PDSCHs verschiedenen Bedienzellen entsprechen und jedes Stück der ersten DCI einen Zähler-Downlink-Zuweisungsindex, C-DAI, umfasst; und
Konstruieren (402) eines Typ-2-HARQ-Bestätigungs-, HARQ-ACK-, Codebuchs basierend auf dem C-DAI in den mindestens zwei Stücken der ersten DCI;
wobei eine Zählweise des C-DAI in den mindestens zwei Stücken der ersten DCI umfasst: Zählen basierend auf Indizes von Bedienzellen;
wobei das Zählen basierend auf den Indizes der Bedienzellen umfasst: Zählen in aufsteigender Reihenfolge basierend auf einem kleinsten Bedienzellenindex, der den mindestens zwei durch jedes Stück der ersten DCI geplanten PDSCHs entspricht.

2. Verfahren nach Anspruch 1, wobei die Zählweise des C-DAI in den mindestens zwei Stücken der ersten DCI ferner umfasst: Zählen basierend auf mindestens einem von einem Index einer PDCCH-Überwachungsgelegenheit oder einer PDSCH-Empfangszeit; oder
wobei das Zählen basierend auf den Indizes der Bedienzellen umfasst: Zählen basierend auf den Indizes der Bedienzellen in einem Fall, dass Indizes von PDCCH-Überwachungsgelegenheiten identisch sind.

3. Verfahren nach Anspruch 1 oder 2, wobei das Zählen des C-DAI in den mindestens zwei Stücken der ersten DCI ferner umfasst:
Zählen basierend auf der PDSCH-Empfangszeit für eine gleiche (Bedienzelle, PDCCH-Überwachungsgelegenheit}.

4. Verfahren nach einem der Ansprüche 1 bis 3, wobei das HARQ-ACK-Codebuch Bits von HARQ-ACK umfasst, die jeweils den mindestens zwei Stücken der ersten DCI entsprechen; und
wobei eine Anzahl der Bits des HARQ-ACK, die der ersten DCI entsprechen, durch mindestens eines der Folgenden bestimmt wird:
eine optionale Anzahl der mindestens zwei durch die erste DCI geplanten PDSCHs;
eine maximale Anzahl der mindestens zwei durch die erste DCI geplanten PDSCHs; oder
eine maximale Anzahl von Codewörtern, CWs, die durch die erste DCI für jede von P1 Bedienzellen planbar sind, wobei P1 eine ganze Zahl größer oder gleich 1 ist.

5. Verfahren nach Anspruch 4, wobei die mindestens zwei durch die erste DCI geplanten PDSCHs PDSCHs sind, die Bedienzellen in einer ersten Bedienzellenkombination entsprechen; und wobei die erste Bedienzellenkombination eine von m durch ein System vorkonfigurierten Bedienzellenkombinationen ist, wobei m eine ganze Zahl größer oder gleich 1 ist.

6. Verfahren nach Anspruch 5, wobei die Anzahl der Bits des HARQ-ACK, die der ersten DCI entsprechen, durch erste Werte bestimmt wird, die den m Bedienzellenkombinationen entsprechen;
wobei der erste Wert basierend auf mindestens einem von einer maximalen Anzahl von CWs, die durch die erste DCI für jede der Bedienzellen in einer dem ersten Wert entsprechenden Bedienzellenkombination planbar sind, oder einer Anzahl von Bedienzellen in der dem ersten Wert entsprechenden Bedienzellenkombination bestimmt wird.

7. Verfahren nach Anspruch 6, wobei die Anzahl der Bits des HARQ-ACK, die der ersten DCI entsprechen, ist:
ein Maximalwert der ersten Werte, die den m Bedienzellenkombinationen entsprechen; und
wobei ein erster Wert, der einer zweiten Bedienzellenkombination der m Bedienzellenkombinationen entspricht, umfasst:
ein Produkt aus einer Anzahl von Bedienzellen in der zweiten Bedienzellenkombination und einem Maximalwert von maximalen Anzahlen von CWs, die durch die erste DCI für die Bedienzellen in der zweiten Bedienzellenkombination planbar sind; oder
eine Summe der maximalen Anzahlen von CWs, die durch die erste DCI für die Bedienzellen in der zweiten Bedienzellenkombination planbar sind, wobei die zweite Bedienzellenkombination eine beliebige der m Bedienzellenkombinationen ist.

8. Verfahren nach einem der Ansprüche 1 bis 7, wobei eine Reihenfolge von Bits von HARQ-ACK, die den mindestens zwei durch die erste DCI geplanten PDSCHs entsprechen, ist:
eine aufsteigende oder absteigende Reihenfolge von CW-Indizes für eine gleiche Bedienzelle; und
eine aufsteigende oder absteigende Reihenfolge von Indizes von Bedienzellen für verschiedene Bedienzellen.

9. Verfahren nach einem der Ansprüche 1 bis 8, wobei das Konstruieren (402) des Typ-2-HARQ-ACK-Codebuchs basierend auf dem C-DAI in der ersten DCI umfasst:
in einem Fall, dass die mindestens zwei durch die erste DCI geplanten PDSCHs PDSCHs sind, die Bedienzellen in der ersten Bedienzellenkombination entsprechen, und ein zweiter Wert kleiner als eine Anzahl M von Bits von HARQ-ACK der ersten DCI ist, Bestimmen der letzten M minus zweiter Wert Bits im HARQ-ACK-Codebuch als erste Information; und
wobei der zweite Wert basierend auf mindestens einem von einer maximalen Anzahl von CWs, die durch die erste DCI für jede der Bedienzellen in der ersten Bedienzellenkombination planbar sind, oder einer Anzahl der Bedienzellen in der ersten Bedienzellenkombination bestimmt wird.

10. Verfahren nach Anspruch 9, wobei der zweite Wert umfasst:
eine Summe der maximalen Anzahlen von CWs, die durch die erste DCI für die Bedienzellen in der ersten Bedienzellenkombination planbar sind; oder
ein Produkt aus der Anzahl der Bedienzellen in der ersten Bedienzellenkombination und einem Maximalwert der maximalen Anzahlen von CWs, die durch die erste DCI für die Bedienzellen in der ersten Bedienzellenkombination planbar sind.

11. Endgerät, das zum Konstruieren eines Hybrid-Automatic-Repeat-Request-, HARQ-, Codebuchs konfiguriert ist, umfassend:
ein Empfangsmodul (801), das konfiguriert ist, mindestens zwei Stücke einer ersten Downlink-Steuerinformation, DCI, zu empfangen, wobei jedes Stück der ersten DCI zum Planen von mindestens zwei physischen gemeinsam genutzten Downlink-Kanälen, PDSCHs, verwendet wird, wobei die mindestens zwei durch jedes Stück der ersten DCI geplanten PDSCHs verschiedenen Bedienzellen entsprechen und jedes Stück der ersten DCI einen Zähler-Downlink-Zuweisungsindex, C-DAI, umfasst; und
ein Konstruktionsmodul (802), das konfiguriert ist, ein Typ-2-HARQ-Bestätigungs-, HARQ-ACK-, Codebuch basierend auf dem C-DAI in den mindestens zwei Stücken der ersten DCI zu konstruieren;
wobei eine Zählweise des C-DAI in den mindestens zwei Stücken der ersten DCI umfasst: Zählen basierend auf Indizes von Bedienzellen;
wobei das Zählen basierend auf den Indizes der Bedienzellen umfasst: Zählen in aufsteigender Reihenfolge basierend auf einem kleinsten Bedienzellenindex, der den mindestens zwei durch jedes Stück der ersten DCI geplanten PDSCHs entspricht.

12. Endgerät nach Anspruch 11, wobei die Zählweise des C-DAI in den mindestens zwei Stücken der ersten DCI ferner umfasst: Zählen basierend auf mindestens einem von einem Index einer PDCCH-Überwachungsgelegenheit oder einer PDSCH-Empfangszeit; oder
wobei das Zählen basierend auf den Indizes der Bedienzellen umfasst: Zählen basierend auf den Indizes der Bedienzellen in einem Fall, dass Indizes von PDCCH-Überwachungsgelegenheiten identisch sind.

13. Endgerät nach Anspruch 11 oder 12, wobei die Zählweise des C-DAI in den mindestens zwei Stücken der ersten DCI ferner umfasst:
Zählen basierend auf der PDSCH-Empfangszeit für eine gleiche (Bedienzelle, PDCCH-Überwachungsgelegenheit}.

14. Netzwerkvorrichtung, die zum Konstruieren eines Hybrid-Automatic-Repeat-Request-, HARQ-, Codebuchs konfiguriert ist, umfassend
ein Sendemodul (901), das konfiguriert ist, mindestens zwei Stücke einer ersten Downlink-Steuerinformation, DCI, zu übertragen, wobei ein Zähler-Downlink-Zuweisungsindex, C-DAI, in den mindestens zwei Stücken der ersten DCI konfiguriert ist, ein Typ-2-HARQ-Bestätigungs-, HARQ-ACK-, Codebuch durch ein Endgerät zu konstruieren, wobei jedes Stück der ersten DCI zum Planen von mindestens zwei physischen gemeinsam genutzten Downlink-Kanälen, PDSCHs, verwendet wird und die mindestens zwei durch jedes Stück der ersten DCI geplanten PDSCHs verschiedenen Bedienzellen entsprechen;
wobei eine Zählweise des C-DAI in den mindestens zwei Stücken der ersten DCI umfasst: Zählen basierend auf Indizes von Bedienzellen;
wobei das Zählen basierend auf den Indizes der Bedienzellen umfasst: Zählen in aufsteigender Reihenfolge basierend auf einem kleinsten Bedienzellenindex, der den mindestens zwei durch jedes Stück der ersten DCI geplanten PDSCHs entspricht.

15. Netzwerkvorrichtung nach Anspruch 14, wobei die Zählweise des C-DAI in den mindestens zwei Stücken der ersten DCI ferner umfasst: Zählen basierend auf mindestens einem von einem Index einer PDCCH-Überwachungsgelegenheit oder einer PDSCH-Empfangszeit; oder
wobei das Zählen basierend auf den Indizes der Bedienzellen umfasst: Zählen basierend auf den Indizes der Bedienzellen in einem Fall, dass Indizes von PDCCH-Überwachungsgelegenheiten identisch sind.

## Revendications

1. Procédé de construction d'un livre de codes de demande de répétition automatique hybride, HARQ, exécuté par un dispositif terminal, le procédé comprenant :
la réception (401) d'au moins deux éléments de premières informations de contrôle de liaison descendante, DCI, dans lequel chaque élément de première DCI est utilisé pour ordonnancer au moins deux canaux partagés de liaison descendante physiques, PDSCH, les au moins deux PDSCH ordonnancés par chaque élément de première DCI correspondant à différentes cellules de desserte, et chaque élément de première DCI comprend un indice d'attribution de liaison descendante de compteur, C-DAI ; et
la construction (402) d'un livre de codes d'accusé de réception HARQ de type 2, HARQ-ACK, basé sur le C-DAI dans les au moins deux éléments de première DCI;
dans lequel une manière de comptage du C-DAI dans les au moins deux éléments de première DCI comprend : un comptage basé sur des indices de cellule de desserte ;
dans lequel le comptage basé sur les indices des cellules de desserte comprend:
un comptage dans un ordre croissant basé sur un plus petit indice de cellule de desserte correspondant aux au moins deux PDSCH ordonnancés par chaque élément de première DCI.

2. Procédé selon la revendication 1, dans lequel la manière de comptage du C-DAI dans les au moins deux éléments de première DCI comprend en outre : un comptage basé sur au moins l'un d'un indice d'une occasion de surveillance PDCCH ou d'un temps de réception PDSCH ; ou
le comptage basé sur les indices de la cellule de desserte comprend : un comptage basé sur les indices de la cellule de desserte dans un cas où des indices d'occasions de surveillance PDCCH sont identiques.

3. Procédé selon la revendication 1 ou 2, dans lequel le comptage du C-DAI dans les au moins deux éléments de première DCI comprend en outre :
un comptage basé sur le temps de réception PDSCH pour une même {cellule de desserte, occasion de surveillance PDCCH}.

4. Procédé selon l'une quelconque des revendications 1 à 3, dans lequel le livre de codes HARQ-ACK comprend des bits de HARQ-ACK correspondant respectivement aux au moins deux éléments de première DCI; et
un nombre des bits du HARQ-ACK correspondant à la première DCI est déterminé par au moins l'un de :
un nombre optionnel des au moins deux PDSCH ordonnancés par la première DCI;
un nombre maximal des au moins deux PDSCH ordonnancés par la première DCI ; ou
un nombre maximal de mots de code, CW, pouvant être ordonnancés par la première DCI pour chacune de P1 cellules de desserte, dans lequel P1 est un entier supérieur ou égal à 1.

5. Procédé selon la revendication 4, dans lequel les au moins deux PDSCH ordonnancés par la première DCI sont des PDSCH correspondant à des cellules de desserte dans une première combinaison de cellules de desserte ; et la première combinaison de cellules de desserte est l'une de m combinaisons de cellules de desserte préconfigurées par un système, dans lequel m est un entier supérieur ou égal à 1.

6. Procédé selon la revendication 5, dans lequel le nombre des bits du HARQ-ACK correspondant à la première DCI est déterminé par des premières valeurs correspondant aux m combinaisons de cellules de desserte ;
dans lequel la première valeur est déterminée sur la base d'au moins l'un d'un nombre maximal de CW pouvant être ordonnancés par la première DCI pour chacune des cellules de desserte dans une combinaison de cellules de desserte correspondant à la première valeur ou d'un nombre de cellules de desserte dans la combinaison de cellules de desserte correspondant à la première valeur.

7. Procédé selon la revendication 6, dans lequel le nombre des bits du HARQ-ACK correspondant à la première DCI est :
une valeur maximale des premières valeurs correspondant aux m combinaisons de cellules de desserte ; et
une première valeur correspondant à une deuxième combinaison de cellules de desserte des m combinaisons de cellules de desserte comprend :
un produit d'un nombre de cellules de desserte dans la deuxième combinaison de cellules de desserte et d'une valeur maximale de nombres maximaux de CW pouvant être ordonnancés par la première DCI pour les cellules de desserte dans la deuxième combinaison de cellules de desserte ; ou
une somme des nombres maximaux de CW pouvant être ordonnancés par la première DCI pour les cellules de desserte dans la deuxième combinaison de cellules de desserte, dans lequel la deuxième combinaison de cellules de desserte est l'une quelconque des m combinaisons de cellules de desserte.

8. Procédé selon l'une quelconque des revendications 1 à 7, dans lequel un ordre de bits de HARQ-ACK correspondant aux au moins deux PDSCH ordonnancés par la première DCI est :
un ordre croissant ou décroissant d'indices de CW pour une même cellule de desserte ; et
un ordre croissant ou décroissant d'indices de cellules de desserte pour différentes cellules de desserte.

9. Procédé selon l'une quelconque des revendications 1 à 8, dans lequel la construction (402) du livre de codes HARQ-ACK de type 2 basé sur le C-DAI dans la première DCI comprend :
dans un cas où les au moins deux PDSCH ordonnancés par la première DCI sont des PDSCH correspondant à des cellules de desserte dans la première combinaison de cellules de desserte, et une deuxième valeur est inférieure à un nombre M de bits de HARQ-ACK de la première DCI, la détermination des derniers M moins deuxième valeur bits dans le livre de codes HARQ-ACK comme premières informations ; et
la deuxième valeur est déterminée sur la base d'au moins l'un d'un nombre maximal de CW pouvant être ordonnancés par la première DCI pour chacune des cellules de desserte dans la première combinaison de cellules de desserte ou d'un nombre des cellules de desserte dans la première combinaison de cellules de desserte.

10. Procédé selon la revendication 9, dans lequel la deuxième valeur comprend :
une somme des nombres maximaux de CW pouvant être ordonnancés par la première DCI pour les cellules de desserte dans la première combinaison de cellules de desserte ; ou
un produit du nombre des cellules de desserte dans la première combinaison de cellules de desserte et d'une valeur maximale des nombres maximaux de CW pouvant être ordonnancés par la première DCI pour les cellules de desserte dans la première combinaison de cellules de desserte.

11. Dispositif terminal configuré pour construire un livre de codes de demande de répétition automatique hybride, HARQ, comprenant :
un module de réception (801), configuré pour recevoir au moins deux éléments de premières informations de contrôle de liaison descendante, DCI, dans lequel chaque élément de première DCI est utilisé pour ordonnancer au moins deux canaux partagés de liaison descendante physiques, PDSCH, les au moins deux PDSCH ordonnancés par chaque élément de première DCI correspondent à différentes cellules de desserte, et chaque élément de première DCI comprend un indice d'attribution de liaison descendante de compteur, C-DAI ; et
un module de construction (802), configuré pour construire un livre de codes d'accusé de réception HARQ de type 2, HARQ-ACK, basé sur le C-DAI dans les au moins deux éléments de première DCI ;
dans lequel une manière de comptage du C-DAI dans les au moins deux éléments de première DCI comprend : un comptage basé sur des indices de cellule de desserte ;
dans lequel le comptage basé sur les indices de la cellule de desserte comprend :
un comptage dans un ordre croissant basé sur un plus petit indice de cellule de desserte correspondant aux au moins deux PDSCH ordonnancés par chaque élément de première DCI.

12. Dispositif terminal selon la revendication 11, dans lequel la manière de comptage du C-DAI dans les au moins deux éléments de première DCI comprend en outre :
un comptage basé sur au moins l'un d'un indice d'une occasion de surveillance PDCCH ou d'un temps de réception PDSCH ; ou
le comptage basé sur les indices de la cellule de desserte comprend : un comptage basé sur les indices de la cellule de desserte dans un cas où des indices d'occasions de surveillance PDCCH sont identiques.

13. Dispositif terminal selon la revendication 11 ou 12, dans lequel la manière de comptage du C-DAI dans les au moins deux éléments de première DCI comprend en outre :
un comptage basé sur le temps de réception PDSCH pour une même {cellule de desserte, occasion de surveillance PDCCH}.

14. Dispositif de réseau configuré pour construire un livre de codes de demande de répétition automatique hybride, HARQ, comprenant :
un module de transmission (901), configuré pour transmettre au moins deux éléments de premières informations de contrôle de liaison descendante, DCI, dans lequel un indice d'attribution de liaison descendante de compteur, C-DAI, dans les au moins deux éléments de première DCI est configuré pour construire un livre de codes d'accusé de réception HARQ de type 2, HARQ-ACK, par un dispositif terminal, chaque élément de première DCI est utilisé pour ordonnancer au moins deux canaux partagés de liaison descendante physiques, PDSCH, et les au moins deux PDSCH ordonnancés par chaque élément de première DCI correspondent à différentes cellules de desserte ;
dans lequel une manière de comptage du C-DAI dans les au moins deux éléments de première DCI comprend : un comptage basé sur des indices de cellule de desserte ;
dans lequel le comptage basé sur les indices des cellules de desserte comprend: un comptage dans un ordre croissant basé sur un plus petit indice de cellule de desserte correspondant aux au moins deux PDSCH ordonnancés par chaque élément de première DCI.

15. Dispositif de réseau selon la revendication 14, dans lequel la manière de comptage du C-DAI dans les au moins deux éléments de première DCI comprend en outre :
un comptage basé sur au moins l'un d'un indice d'une occasion de surveillance PDCCH ou d'un temps de réception PDSCH ; ou
le comptage basé sur les indices de la cellule de desserte comprend : un comptage basé sur les indices de la cellule de desserte dans un cas où des indices d'occasions de surveillance PDCCH sont identiques.
